Europäisches Patentamt

European Patent Office

Office européen des brevets

(19)

(11) **EP 0 922 942 A1**

(12) **EUROPÄISCHE PATENTANMELDUNG**

(43) Veröffentlichungstag:
16.06.1999 Patentblatt 1999/24

(51) Int. Cl.⁶: **G01F 23/284**, H01P 1/08,
C08K 3/00, C04B 26/08,
B29C 43/00, B29C 67/04

(21) Anmeldenummer: 97121718.7

(22) Anmeldetag: 10.12.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(71) Anmelder:
Endress + Hauser GmbH + Co.
79689 Maulburg (DE)

(72) Erfinder:
• Lopatin, Sergej, Dr.
79539 Lörrach (DE)
• Schwald, Rolf
79650 Schopfheim (DE)
• Hardell, Alexander
79539 Lörrach (DE)

(54) **Mit Mikrowellen arbeitendes Füllstandsmessgerät mit einem Einsatz aus einem Dielektrikum und Verfahren zur Herstellung des Dielektrikums**

(57) Es ist ein mit Mikrowellen arbeitendes Füllstandsmeßgerät mit einem Gehäuse und einem Einsatz aus einem Dielektrikum und ein Verfahren zur Herstellung des Dielektrikums beschrieben, bei dem die Dielektrizitätskonstante des Einsatzes einstellbar ist und bei dem der Einsatz eine hohe chemische Beständigkeit und eine für industrielle Anwendungen ausreichende mechanische Festigkeit aufweist. Das Dielektrikum ist ein Verbundwerkstoff aus einem Fluorkunststoff, insb. auf Polytetraflourethylen, und Keramik und ist durch Mischung von pulverförmiger Keramik und pulverförmigem Fluorkunststoff, Trocknung der Mischung, Pressen der Mischung und Sintern der gepreßten Mischung hergestellt.

FIG. 1

**Beschreibung**

Die Erfindung betrifft ein mit Mikrowellen arbeitendes Füllstandsmeßgerät mit einem metallischen Gehäuseabschnitt, durch den hindurch Mikrowellen gesendet und/oder empfangen werden und in dem ein Einsatz aus einem Dielektrikum angeordnet ist. Weiter betrifft die Erfindung ein Verfahren zur Herstellung des Dielektrikums.

Bei der Füllstandsmessung werden Mikrowellen mittels einer Antenne zur Oberfläche eines Füllguts gesendet und die an der Oberfläche reflektierten Echowellen empfangen. Es wird eine die Echoamplituden als Funktion der Entfernung darstellende Echofunktion gebildet, aus der das wahrscheinliche Nutzecho und dessen Laufzeit bestimmt werden. Aus der Laufzeit wird der Abstand zwischen der Füllgut-Oberfläche und der Antenne bestimmt.

Es können alle bekannten Verfahren angewendet werden, die es ermöglichen, verhältnismäßig kurze Entfernungen mittels reflektierter Mikrowellen zu messen. Die bekanntesten Beispiele sind das Pulsradar und das Frequenzmodulations-Dauerstrichradar (FMCW-Radar).

Beim Pulsradar werden periodisch kurze Mikrowellen-Sendeimpulse, im folgenden als Wellenpakete bezeichnet, gesendet, die von der Füllgut-Oberfläche reflektiert und nach einer abstandsabhängigen Laufzeit wieder empfangen werden. Die empfangene Signalamplitude als Funktion der Zeit stellt die Echofunktion dar. Jeder Wert dieser Echofunktion entspricht der Amplitude eines in einem bestimmten Abstand von der Antenne reflektierten Echos.

Beim FMCW-Verfahren wird eine kontinuierliche Mikrowelle gesendet, die periodisch linear frequenzmoduliert ist, beispielsweise nach einer Sägezahnfunktion. Die Frequenz des empfangenen Echosignals weist daher gegenüber der Augenblicksfrequenz, die das Sendesignal zum Zeitpunkt des Empfangs hat, eine Frequenzdifferenz auf, die von der Laufzeit des Echosignals abhängt. Die Frequenzdifferenz zwischen Sendesignal und Empfangssignal, die durch Mischung beider Signale und Auswertung des Fourierspektrums des Mischsignals gewonnen werden kann, entspricht somit dem Abstand der reflektierenden Fläche von der Antenne. Ferner entsprechen die Amplituden der Spektrallinien des durch Fouriertransformation gewonnenen Frequenzspektrums den Echoamplituden. Dieses Fourierspektrum stellt daher in diesem Fall die Echofunktion dar.

Mit Mikrowellen arbeitende Füllstandsmeßgeräte werden in sehr vielen Industriezweigen, z.B. in der Chemie oder in der Lebensmittelindustrie, eingesetzt. Typischerweise ist der Füllstand in einem Behälter zu messen. Diese Behälter weisen in der Regel eine Öffnung auf, an der ein Stutzen oder ein Flansch zur Befestigung von Meßgeräten vorgesehen ist.

In der industriellen Meßtechnik werden regelmäßig dielektrische Stabantennen und Hornantennen zum Senden und/oder Empfangen eingesetzt. Typischerweise wird ein topfartiges Gehäuse verwendet, das die Geometrie eines kurzgeschlossenen Hohlleiters aufweist. In dieses ist ein Erregerstift eingeführt, über den Mikrowellen durch das Gehäuse hindurch gesendet und/oder empfangen werden. Bei einer Hornantenne schließt sich an das Gehäuse ein trichterförmiger in behälter-zugewandter Richtung sich aufweitender das Horn bildender Abschnitt an. Im Fall der Stabantenne ist ein in den Behälter weisender Stab aus einem Dielektrikum vorgesehen. Üblicherweise ist der Innenraum des Gehäuse von einem Einsatz aus einem Dielektrikum nahezu vollständig ausgefüllt. Im Fall der Hornantenne weist der Einsatz ein kegelförmiges in den Behälter weisendes Ende auf. Bei Stabantennen schließt sich an den Einsatz die stabförmige Antenne an.

Aufgrund der Dimensionierung des Hohlleiters und der Dielektrizitätskonstanten des Einsatzes sind nur bestimmte Moden ausbreitungsfähig. Für die Füllstandsmessungen sind bevorzugt Moden mit einer Abstrahlcharakteristik mit einer ausgeprägten Vorwärtskeule, bei Rundhohlleitern z.B. der transversal-elektrische 11 (TE-11) Mode, einzusetzen. Auch ist die Sendefrequenz in den meisten Ländern vorgeschrieben.

Damit die Abmessungen des Gehäuses trotzdem in gewissen Grenzen variierbar sind, z.B. um Anpassungen an Abmessungen von Behältern vorzunehmen, ist ein Dielektrikum mit einer im wesentlichen kontinuierlich einstellbaren Dielektrizitätskonstante von Vorteil. Im nachfolgenden Text ist mit Dielektrizitätskonstante immer die auf die Vakuumdielektrizitätskonstante bezogene Dielektrizitätskonstante bezeichnet, deren Wert gleich dem Quotienten der Dielektrizitätskonstante geteilt durch die Vakuumdielektrizitätskonstante ist.

In der DE-A 44 05 855 ist ein mit Mikrowellen arbeitendes Füllstandsmeßgerät beschrieben

- mit einem metallischen Gehäuseabschnitt,
- durch den hindurch Mikrowellen gesendet und/oder empfangen werden und
- in dem ein Einsatz aus einem Dielektrikum angeordnet ist.

Es weist eine Stabantenne auf und Einsatz und Stabantenne sind aus einem Dielektrikum. Es ist angegeben, hierfür Kunststoff, Glas bzw. Keramik oder eine Mischung der genannten Materialien zu verwenden.

Der Einsatz kann mit einem in dem Behälter befindlichen Medium in Berührung gelangen. Je nach Anwendung kann dies durchaus ein aggressives Medium sein. Folglich sollte der Einsatz neben der für industrielle Anwendungen erforderlichen mechanischen Beständigkeit auch eine hohe chemische Beständigkeit aufweisen.

Bei handelsüblichen mit Mikrowellen arbeitenden Füllstandmeßgeräten wird aus diesem Grund häufig Polytetraflourethylen (PTFE) verwendet, das eine hohe chemische Beständigkeit aufweist. Die Dielektrizitätskonstante von Polytetraflourethylen (PTFE) ist jedoch nicht variabel.

In der US-A 5,227,749 sind Mikrowellenschaltungen und Komponenten, z.B. Mikrowellen-Streifenleitungen, beschrieben, bei denen gewünschte elektrische und mechanische Eigenschaften simultan erreicht werden, indem ein mit einem Dielektrikum gefülltes Gerüst verwendet wird. Das Gerüst bietet ausreichende mechanische Stabilität, so daß das Dielektrikum rein nach dessen dielektrischen Eigenschaften ausgewählt werden kann.

Ein solcher Aufbau stellt zwar bei Mikrowellen-Streifenleitungen und Mikrowellen-Schaltungen einen gangbaren Weg dar, für einen Einsatz in einer Antenne ist dieses vorgehen jedoch ungeeignet. Gehäuse und Einsatz wirken als Hohlleiter in dem sich die Mikrowellen ausbilden. Ein Gerüst würde andere dielektrische Eigenschaften als das darin eingebettete Dielektrikum aufweisen und somit beim Senden und/oder Empfangen aufgrund dessen nicht-isotropen elektrischen Eigenschaften zu erheblichen Störungen der gewünschten Moden führen.

In der US-A 4,335,180 ist ein Dielektrikum für Mikrowellen-Leiterplatten und ein Verfahren zu dessen Herstellung beschrieben. Das Dielektrikum besteht aus Polytetraflourethylen (PTFE) einem Füllmaterial und einem Faserstoff. Der Anteil des Füllmaterials ist mit 10 bis 75 Gewichtsprozent angegeben. Als Füllmaterial ist unter anderem Aluminiumoxid genannt. Der Anteil an Fasern beträgt zwischen 2.5 und 7 Gewichtsprozent des Dielektrikums und gewährleistet dessen mechanische Stabilität. Die Dielektrizitätskonstante des Materials ist mit 10 bis 11 angegeben.

Hergestellt wird dieses Dielektrikum indem Füllmaterial und Faserstoff unter eine Polymer-Dispersion gemischt werden. Dem so gebildeten Schlicker wird ein Flockungsmittel zugefügt bis eine teig-ähnliche Masse entsteht, die dann geformt und getrocknet wird.

In einer Leiterplatte lassen sich die Fasern durch entsprechende Verarbeitung, z.B. Pressen oder Walzen in einer Ebene ausrichten, so daß eine im wesentlichen homogene dünne Platte, also ein im wesentlichen zweidimensionales Gebilde, entsteht. Ein dreidimensionaler Körper ist auf diese Weise jedoch nicht ohne weiteres herstellbar. In einem dreidimensionalen Körper lassen sich Fasern durch Pressen oder Walzen nicht in einer Ebene ausrichten. Aufgestellte Fasern verhalten sich wie kleine Federn und der Körper bleibt trotz Pressens entsprechend porös und inhomogen. Er würde folglich eine geringere mechanische Festigkeit aufweisen und Inhomogenitäten würden zu Reflexionen der Mikrowellen führen. Auch besteht die Gefahr, daß sich das poröse Material mit Feuchtigkeit vollsaugt. Feuchtigkeit im Material führt zu einem hohen Verlustfaktor tan $\delta$.

Es ist eine Aufgabe der Erfindung, ein mit Mikrowellen arbeitendes Füllstandsmeßgerät mit einem Gehäuse und einem Einsatz aus einem Dielektrikum und ein Verfahren zur Herstellung des Dielektrikums anzugeben, bei dem die Dielektrizitätskonstante des Einsatzes einstellbar ist und bei dem der Einsatz eine hohe chemische Beständigkeit und eine für industrielle Anwendungen ausreichende mechanische Festigkeit aufweist.

Hierzu besteht die Erfindung in einem mit Mikrowellen arbeitendes Füllstandsmeßgerät

-   mit einem metallischen Gehäuse,
-   durch das hindurch Mikrowellen gesendet und/oder empfangen werden und
-   in dem ein Einsatz aus einem Dielektrikum angeordnet ist, das aus einem Verbundwerkstoff aus einem Fluorkunststoff, insb. aus Polytetrafluorethylen (PTFE), und Keramik besteht.

Gemäß einer vorteilhaften Ausgestaltung weist der Verbundwerkstoff einen Anteil an Keramik auf, der unterhalb der Perkolationsgrenze liegt.

Gemäß einer weiteren Ausgestaltung weist der Verbundwerkstoff eine Dielektrizitätskonstante $\epsilon$ auf und der Quotient aus der Dielektrizitätskonstanten $\epsilon$ und der Vakuumdielektrizitätskonstanten $\epsilon_0$ weist einen Wert zwischen 2 und 10 auf. Weiter weist der Verbundwerkstoff vorzugsweise einen Verlustfaktor tan $\delta$ auf, der kleiner als ein Fünfzigstel ist.

Gemäß einer vorteilhaften Weiterbildung weist der Einsatz in einem in Senderichtung angeordneten Abschnitt des Gehäuses einen niedrigeren Anteil an Keramik auf, als in einem der Senderichtung abgewandten Abschnitt.

Weiterhin besteht die Erfindung in einem Verfahren zur Herstellung eines Verbundwerkstoffs aus Fluorkunststoff, insb. Polytetrafluorethylen (PTFE), und Keramik, welches die folgenden Schritte umfaßt:

a) Erzeugen einer Mischung aus pulverförmiger Keramik und pulverförmigem Fluorkunststoff,
b) Trocknen der Mischung,
c) Pressen der Mischung und
d) Sintern der gepreßten Mischung.

Gemäß einer vorteilhaften Ausgestaltung des Verfahrens liegt der Anteil der Keramik an der Mischung unterhalb der Perkolationsgrenze.

Gemäß einer weiteren Ausgestaltung des Verfahrens weist der Quotient aus der Dielektrizitätskonstante $\epsilon$ des Verbundwerkstoffs und der Vakuumdielektrizitätskonstanten $\epsilon_0$ einen Wert zwischen 2 und 10 auf und der Verbund-

werkstoff weist einen Verlustfaktor tan $\delta$ auf, der kleiner als ein Fünfzigstel ist.

Gemäß einer weiteren Ausgestaltung des Verfahrens werden zwei oder mehr Mischungen mit verschieden hohen Anteilen an Keramik erzeugt werden, und die Mischungen werden vor dem Pressen derart übereinander geschichtet, daß der Anteil an Keramik in dem Verbundwerkstoff von Schicht zu Schicht abnimmt.

Die Erfindung und weitere Vorteile werden nun anhand der Figuren der Zeichnung, in denen zwei Ausführungsbeispiele des mit Mikrowellen arbeitenden Füllstandsmeßgerät dargestellt sind, näher erläutert; gleiche Teile sind in den Figuren mit gleichen Bezugszeichen versehen.

Fig. 1    zeigt einen Längsschnitt durch ein erstes Ausführungsbeispiel eines mit Mikrowellen arbeitenden Füllstandsmeßgeräts; und

Fig. 2    zeigt einen Längsschnitt durch ein zweites Ausführungsbeispiel eines mit Mikrowellen arbeitenden Füllstandsmeßgeräts.

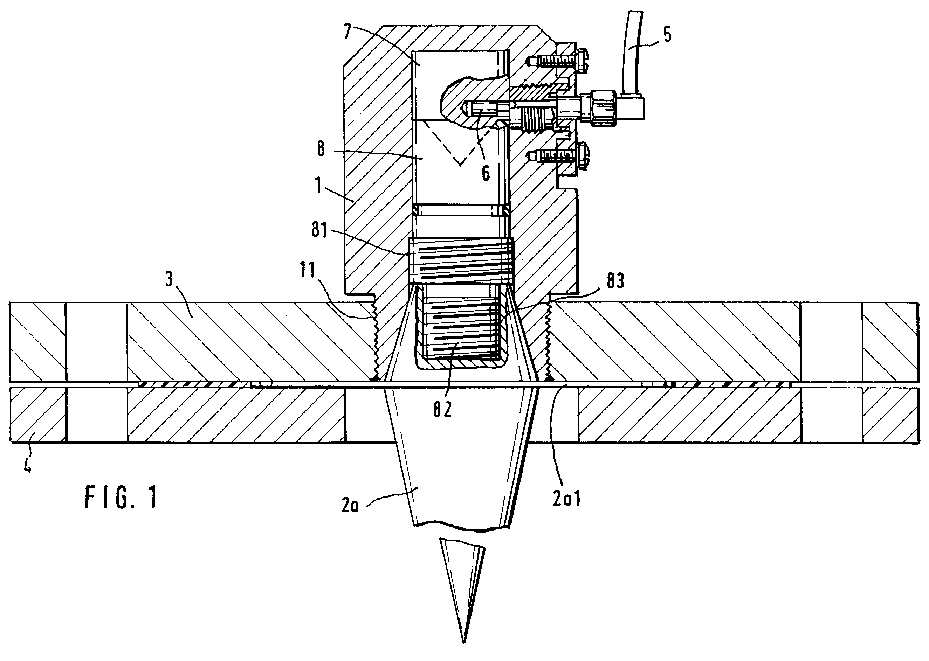

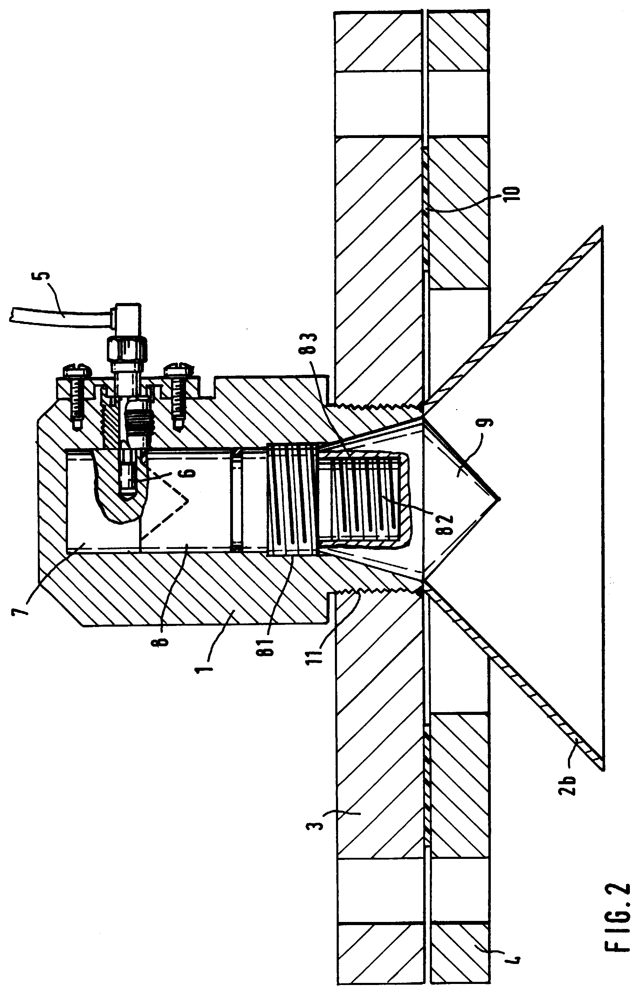

In den Figuren 1 und 2 ist jeweils ein Längsschnitt durch ein mit Mikrowellen arbeitendes auf einem Behälter zu befestigendes Füllstandsmeßgerät 1 schematisch dargestellt. In dem in den Figuren nicht dargestellten Behälter befindet sich ein Medium und das Füllstandmeßgerät 1 dient dazu, die Füllhöhe dieses Mediums in dem Behälter zu bestimmen. Hierzu werden bei dem Ausführungbeispiel von Fig. 1 Mikrowellen über eine stabförmige in den Behälter weisende Antenne 2a in den Behälter gesendet und die an der Oberfläche des Füllguts reflektierten Echowellen empfangen.

Bei dem in Fig. 2 dargestellten Ausführungsbeispiel ist eine Hornantenne vorgesehen. Diese weist ein trichterförmiges sich in behälter-zugewandter Richtung aufweitendes Horn 2b aus einem Metall, insb. aus einem Edelstahl, auf.

Das Meßgerät weist in beiden Ausführungsbeispielen jeweils ein zylindrisches Gehäuse 1 auf. Bei dem Ausführungsbeispiel von Fig. 1 ist das Gehäuse 1 mit einem Außengewinde 11 versehen, mittels dessen es in einen Flansch 3 eingeschraubt ist. Dieser ist auf dem Behälter auf einem entsprechenden Gegenflansch 4 montiert. Bei dem Ausführungsbeispiel von Fig. 2 ist das Gehäuse 1 ebenfalls in den Flansch 3 eingeschraubt. Das Horn 2b ist nachträglich an den Flansch 3 angeschraubt.

Das Gehäuse 1 hat die Form eines Topfes bzw. eines einseitig endseitig abgeschlossenen Rohres. Die Mikrowellen werden von einem nicht dargestellten Mikrowellen-Generator erzeugt und über eine Koaxialleitung 5 einem seitlich in das Gehäuse 1 eingeführten Erregerelement 6 zugeführt. Selbstverständlich ist es auch möglich das Erregerelement stirnseitig in das Gehäuse einzuführen. Der Mikrowellengenerator ist beispielsweise ein Pulsradargerät, ein FMCW-Gerät oder ein kontinuierlich schwingender Mikrowellen-Oszillator.

Das Gehäuse 1 besteht aus einem elektrisch leitenden Material, z.B. Aluminium oder Edelstahl. Die Mikrowellen werden durch das Gehäuse 1 hindurch über die Antenne 2a bzw. 2b gesendet und/oder empfangen.

In dem Gehäuse 1 ist bei beiden Ausführungsbeispielen ein Endelement 7 angeordnet, das einen behälterabgewandten Innenraum des Gehäuses 1 bis auf eine Ausnehmung, die zur Aufnahme des Erregerelements 6 dient, vollständig ausfüllt. Auf der behälter-zugewandten Seite ist an das Endelement 7 ein Kegel angeformt. Ein daran angrenzender Innenraum des Gehäuses 1 ist von einem im wesentlichen zylindrischen Einsatz 8 ausgefüllt. Der Einsatz weist an dessen endelement-zugewandten Seite eine Ausnehmung auf, die formgleich zu dem Kegel des Endelements 7 ist. Der Einsatz 8 ist mittels eines Gewindes 81 in das Gehäuse 1 eingeschraubt.

In behälter-zugewandter Richtung ist an den Einsatz 8 ein Abschnitt 82 mit geringerem Außendurchmesser angeformt. Dieser weist ein Außengewinde 83 auf. Bei dem Ausführungsbeispiel von Fig. 1 ist auf dieses Außengewinde 83 die stabförmige Antenne 2a aufgeschraubt. Die Antenne 2a weist hierzu eine entsprechend geformte mit einem Innengewinde versehene Ausnehmung auf. Bei dem in Fig. 2 dargestellten Ausführungsbeispiel ist auf den Abschnitt 82 ein kegelförmiges in Richtung des Behälters weisendes Endstück 9 aufgeschraubt.

Die Abdichtung des Behälters erfolgt bei dem Ausführungsbeispiel von Fig. 1 über eine sich radial nach außen erstreckende an die stabförmige Antenne 2a angeformte Ringscheibe 2a1, die zwischen dem Flansch 3 und dem Gegenflansch 4 eingespannt ist. Bei dem Ausführungsbeispiel von Fig. 2 ist eine ringscheibenförmige Dichtung 10 vorgesehen, die ebenfalls zwischen dem Flansch 3 und dem Gegenflansch 4 eingespannt ist.

Der Einsatz 8 besteht aus einem Dielektrikum, das ein Verbundwerkstoff aus einem Fluorkunststoff und Keramik ist.

Unter einem Fluorkunststoff wird ein fluorhaltiges Polymerisat, d.h. ein Polymer mit hohem Fluoranteil, verstanden. Vorzugsweise ist der Fluorkunststoff Polytetrafluorethylen (PTFE). Ebenfalls sehr gut geeignet sind Modifikationen von Polytetrafluorethylen (PTFE), bei denen Polytetrafluorethylen (PTFE) als Grundsubstanz dient. Beispiele hierfür sind Tetrafluorethylen-Hexafluorpropylen-Copolymerisat (FEP) und Perfluoralkoxy-Copolymerisat (PFA). Die nachfolgende Beschreibung erfolgt am Beispiel von Polytetrafluorethylen (PTFE). Dies ist jedoch nicht als Einschränkung zu sehen.

Vorzugsweise besteht das Endstück 7 ebenfalls aus diesem Material. Bei einer Hornantenne wie sie in Fig. 2 dargestellt ist, besteht auch das kegelförmige Endstück 9 vorzugsweise aus diesem Verbundwerkstoff.

Der Anteil an Keramik liegt vorzugsweise unterhalb der Perkolationsgrenze. Unterhalb der Perkolationsgrenze besteht unter den Partikeln aus Keramik in den drei Raumrichtungen keine durchgehende Verbindung. Je nach Partikelgröße sind hierdurch Anteile an Keramik von bis zu 35 Volumentprozent möglich.

Hierdurch ist erreicht, daß die Partikel aus Keramik fest in das Polytetrafluorethylen (PTFE) eingebettet sind. Der Verbundwerkstoff weist somit eine mechanische Festigkeit auf, die im wesentlichen der Festigkeit von Polytetrafluorethylen (PTFE) entspricht. Der Werkstoff ist homogen und weist eine geringe Porösität auf.

Die Perkolationsgrenze hängt von der Größe der Partikel der beiden Komponenten ab und ist experimentell bestimmbar, indem die Dielektrizitätskonstante oder der spezifische Widerstand des Materials in Abhängigkeit von dem Anteil an Keramik bestimmt wird. An der Perkolationsgrenze ist ein deutlicher nicht-linearer Anstieg dieser Größen zu verzeichnen.

Die Keramik ist vorzugsweise ein Aluminiumoxid ($Al_2O_3$), z.B. Korund. Es sind aber auch Bariumtitanat ($BaTi_4O_9$), Calciumtitanat ($CaTiO_3$) oder Alumasilikate einsetzbar.

Die Dielektrizitätskonstante von Aluminiumoxid ($Al_2O_3$) weist einen Wert von ungefähr $\varepsilon/\varepsilon_0 \cong 7$ auf, bei Bariumtitanat ($BaTi_4O_9$) liegt dieser Wert bei $\varepsilon/\varepsilon_0 \cong 50$ und bei Calciumtitanat ($CaTiO_3$) ist mit einem Wert von $\varepsilon/\varepsilon_0 \cong 40$ bis 60 erhältlich. Polytetrafluorethylen (PTFE) hat eine Dielektrizitätskonstante von $\varepsilon/\varepsilon_0 \cong 2$.

Die Perkolationsgrenze liegt für Verbundwerkstoff aus Polytetrafluorethylen und Keramik bei einem Volumenanteil von ca. 33 % Keramik, wenn die Größe der Partikel der beiden Komponenten, Keramik und Polytetrafluorethylen (PTFE), ungefähr gleich ist.

Die Dielektrizitätskonstante des Verbundmaterials ist näherungsweise durch lineare Interpolation bestimmbar. Die Dielektrizitätskonstante des Verbundwerkstoffs ist folglich ungefähr gleich der gewichteten Summe der Dielektrizitätskonstanten von Polytetraflourethylen (PTFE) und Keramik wobei die Gewichtungsfaktoren gleich den Volumentanteilen V in Volumenprozent der Komponenten sind.

$$\varepsilon/\varepsilon_0 \text{ (Verbundwerkstoff)} \cong \varepsilon/\varepsilon_0 \text{ (Keramik)} * V\text{(Keramik)} + \varepsilon/\varepsilon_0 \text{ (PTFE)} * V\text{(PTFE)}$$

Die tatsächlichen Werte der Dielektrizitätskonstante $\varepsilon/\varepsilon_0$ des Verbundwerkstoffs liegen bei einem Keramikanteil unterhalb der Perkolationsgrenze geringfügig unterhalb der durch lineare Interpolation bestimmten Werte.

Es sind bei Verwendung von Aluminiumoxid ($Al_2O_3$) Dielektrizitätskonstanten mit Werten von $\varepsilon/\varepsilon_0 \cong 2$ bis $\varepsilon/\varepsilon_0 \cong 5$ einstellbar, bei Verwendung von Bariumtitanat ($BaTi_4O_9$) liegen die einstellbaren Werte zwischen $\varepsilon/\varepsilon_0 \cong 2$ und $\varepsilon/\varepsilon_0 \cong 33$ und bei Calciumtitanat ($CaTiO_3$) zwischen $\varepsilon/\varepsilon_0 = 2$ und $\varepsilon/\varepsilon_0 \cong 30$.

Vorzugsweise liegt der Wert der Dielektrizitätskonstante $\varepsilon/\varepsilon_0$ zwischen 2 und 10. Bedingt durch die niedrige Dielektrizitätskonstante können Gehäuse 1 mit einem verhältnismäßig großen Innendurchmesser verwendet werden.

Bei einer Dielektrizitätskonstanten von $\varepsilon/\varepsilon_0 = 4$ ist ein Innendurchmesser von ca. 2 Zentimetern zum Senden und/oder Empfangen von Mikrowellen mit einer Frequenz von ca. 6 GHz einsetzbar. Dies bietet den Vorteil, daß zwangsläufig vorhandene fertigungs-bedingte Toleranzen der Bauteile geringere Auswirkungen haben.

Ein weiterer großer Vorteil des Verbundwerkstoffes besteht darin, daß der Verbundwerkstoff obwohl er annähernd die mechanische Festigkeit von Polytetrafluorethylen (PTFE) aufweist, er trotzdem einen sehr viel geringeren thermischen Ausdehnungskoeffizienten als Polytetrafluorethylen (PTFE) aufweist.

Der Wärmeausdehnungskoeffizient von Polytetrafluorethylen beträgt ca. $150 * 10^{-6}$. Die Gehäuse 1 bestehen typischerweise aus einem Edelstahl. Edelstahl hat einen Wärmeausdehnungskoeffizient von $17 * 10^{-6}$. Der thermische Ausdehnungskoeffizient von Keramik liegt in der gleichen Größenordnung, wie der thermische Ausdehnungskoeffizient von Metall. Der Wärmeausdehnungskoeffizienten eines Verbundmaterials wird folglich entsprechend dessen Anteil an Keramik deutlich geringer sein als der Wärmeausdehnungskoeffizient von Polytetraflourethylen (PTFE).

Durch den Anteil an Keramik ist gewährleistet, daß Einsatz 8 und Gehäuse 1 eine vergleichbare thermische Ausdehnung erfahren, so daß über die Temperatur sehr viel geringere mechanischen Spannungen im Gehäuse 1 auftreten. Auch weist der Verbundwerkstoff über Druck und Temperatur eine geringere Neigung zu Fließverhalten auf, als dies bei Polytetrafluorethylen (PTFE) der Fall ist. Entsprechend kann das Meßgerät bei höheren Temperaturen und Drücken eingesetzt werden. Gegenüber der Verwendung von reiner Keramik bietet der Verbundwerkstoff zusätzlich den Vorteil, daß er aufgrund des Polytetraflourethylens (PTFE) nicht spröde ist. Es besteht damit die Möglichkeit auch größere Bauteile wie die stabförmige Antenne 2a aus diesem Werkstoff einzusetzen. Der Einsatz einer harten spröden Antenne, z.B. aus reiner Keramik, wäre problematisch, da die Antenne unter mechanischer Belastung abbrechen könnte.

Der Verbundwerkstoff weist einen Verlustfaktor tan $\delta$ auf, der kleiner als ein Fünfzigstel ist. Durch den geringen Verlustfaktor ist sichergestellt, daß die Mikrowellenverlustleistung gering ist.

Bei einer stabförmigen Antenne 2a, wie sie in Fig. 1 dargestellt ist, kann es gewünscht sein, daß die stabförmige Antenne 2a aus Polytetrafluorethylen (PTFE) besteht. Dies ist z.B. dann der Fall wenn ein Meßgerät nachträglich mit einem Einsatz 8 aus dem Verbundmaterial, ausgestattet werden soll, z.B. weil der Verbundwerkstoff eine günstigere Dielektrizitätskonstante aufweist oder weil der Kunde aufgrund der chemischen Eigenschaften seines Füllguts im Behälter ausschließlich Polytetraflourethylen (PTFE) verwenden möchte.

Zur Vermeidung von mechanischen Spannungen aufgrund der unterschiedlichen thermischen Ausdehnungskoeffizienten der Materialien und von dadurch bedingten Verformungen, weist der Einsatz 8 vorzugsweise in einem in Senderichtung angeordneten Abschnitt des Gehäuses 1, hier in antennenabgewandter Richtung einen höheren Anteil an Keramik auf, als in einem in Senderichtung angeordneten, hier antennenzugewandten Abschnitt. Es besteht somit ein quasikontinuierlicher Übergang durch den die Vorteile des Verbundmaterials nutzbar sind, ohne daß Impedanzsprünge auftreten, die zu Reflexionen von Mikrowellen und/oder zu einem größeren Verlustfaktor tan $\delta$ führen wurden.

Ein Verbundwerkstoff aus Keramik und Fluorkunststoff, vorzugsweise Polytetrafluorethylen (PTFE), wird hergestellt, indem die pulverförmige Keramik, z.B. Aluminiumoxid, z.B. korund, oder eine andere Keramik bei 800°C getempert wird. Hierdurch wird die Ablösung von ggf. angelagerten Hydroxylgruppen sichergestellt.

Auch hier erfolgt die Beschreibung am Beispiel von Polytetrafluorethylen. Dies ist nicht als Einschränkung auf dieses Material zu sehen. Die obigen Angaben zu Fluorkunststoffen gelten entsprechend.

In einem nächsten Schritt werden Polytetrafluorethylenpulver und pulverförmige Keramik bei Raumtemperatur gemischt. Der nächste Verfahrensschritt besteht darin die Mischung bei 100 °C bis 150 °C zu trocknen und die getrocknete Mischung unter einem Druck von 500 Kg/cm$^2$ bis 1000 Kg/cm$^2$ bei Raumtemperatur in die gewünschte Form zu pressen. Der gepreßte Rohling wird für mindestens fünf bis sechs Stunden bei 375°C bis 400°C gesintert.

Wird $Al_2O_3$ verwendet, so sollte das pulverförmige zunächst für bei etwa 1250°C getempert, anschließend unter Zugabe von Wasser für 12 Stunden bei Raumtemperatur gemahlen und danach für 12 Stunden bei 100 °C bis 150 °C getrocknet werden, bevor mit dem oben genannten Verfahren begonnen wird.

Ein Verbundwerkstoff, bei dem der Anteil an Keramik einen Gradienten aufweist, ist mittels des beschriebenen Verfahrens herstellbar, indem zwei oder mehr Mischungen mit verschieden hohen Anteilen an Keramik erzeugt werden, und die Mischungen vor dem Pressen derart übereinander geschichtet werden, daß der Anteil an Keramik in dem Verbundwerkstoff von Schicht zu Schicht abnimmt.

## Patentansprüche

1. Mit Mikrowellen arbeitendes Füllstandsmeßgerät mit einem metallischen Gehäuse (1),

   - durch das hindurch Mikrowellen gesendet und/oder empfangen werden und
   - in dem ein Einsatz aus einem Dielektrikum angeordnet ist, das aus einem Verbundwerkstoff aus einem Fluorkunststoff, insb. aus Polytetrafluorethylen (PTFE), und Keramik besteht.

2. Mit Mikrowellen arbeitendes Füllstandsmeßgerät nach Anspruch 1, bei dem der Verbundwerkstoff eine Anteil an Keramik aufweist, der unterhalb der Perkolationsgrenze liegt.

3. Mit Mikrowellen arbeitendes Füllstandsmeßgerät nach Anspruch 1, bei dem der Verbundwerkstoff eine Dielektrizitätskonstante $\varepsilon$ aufweist und der Quotient aus der Dielektrizitätskonstanten $\varepsilon$ und der Vakuumdielektrizitätskonstanten $\varepsilon_0$ einen Wert zwischen 2 und 10 aufweist.

4. Mit Mikrowellen arbeitendes Füllstandsmeßgerät nach Anspruch 1, bei dem der Verbundwerkstoff einen Verlustfaktor tan $\delta$ aufweist, der kleiner als ein Fünfzigstel ist.

5. Mit Mikrowellen arbeitendes Füllstandsmeßgerät nach Anspruch 1, bei dem der Einsatz (8) in einem in Senderichtung angeordneten Abschnitt des Gehäuses (1) einen niedrigeren Anteil an Keramik aufweist als in einem der Senderichtung abgewandten Abschnitt.

6. Verfahren zur Herstellung eines Verbundwerkstoffs aus Fluorkunststoff, insb. aus Polytetrafluorethylen, und Keramik, welches die folgenden Schritte umfaßt:

   a) Erzeugen einer Mischung aus pulverförmiger Keramik und pulverförmigem Fluorkunststoff,
   b) Trocknen der Mischung,
   c) Pressen der Mischung und
   d) Sintern der gepreßten Mischung.

7. Verfahren zur Herstellung eines Verbundwerkstoffs nach Anspruch 6, bei dem der Anteil der Keramik an der Mischung unterhalb der Perkolationsgrenze liegt.

8. Verfahren zur Herstellung eines Verbundwerkstoffs nach Anspruch 7, bei dem
   der Quotient aus der Dielektrizitätskonstante $\varepsilon$ des Verbundwerkstoffs und der Vakuumdielektrizitätskonstanten $\varepsilon_0$ einen Wert zwischen 2 und 10 aufweist und bei dem der Verbundwerkstoff einen Verlustfaktor $\tan \delta$ aufweist, der kleiner als ein Fünfzigstel ist.

9. Verfahren zur Herstellung eines Verbundwerkstoffes nach Anspruch 6, 7 oder 8 bei dem zwei oder mehr Mischungen mit verschieden hohen Anteilen an Keramik erzeugt werden,
   und die Mischungen vor dem Pressen derart übereinander geschichtet werden, daß der Anteil an Keramik in dem Verbundwerkstoff von Schicht zu Schicht abnimmt.

FIG. 1

EP 0 922 942 A1

FIG.2

**Europäisches Patentamt**

# EUROPÄISCHER RECHERCHENBERICHT

Nummer der Anmeldung

EP 97 12 1718

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US 4 613 540 A (TRAUT G ROBERT ET AL) 23.September 1986 | 6,7 | G01F23/284 H01P1/08 |
| Y | * Spalte 3, Zeile 29 - Spalte 6, Zeile 67; Abbildungen; Tabellen * | 1,3,8 | C08K3/00 C04B26/08 |
| | --- | | B29C43/00 |
| X | US 5 358 775 A (HORN III ALLEN F) 25.Oktober 1994 | 6,7 | B29C67/04 |
| Y | * Spalte 1, Absatz 1 - Absatz 2 * | 2 | |
| | * Spalte 4, Zeile 66 - Spalte 5, Zeile 17 * | | |
| | * Spalte 7, Zeile 11 - Zeile 19 * | | |
| | * Spalte 7, Zeile 68 - Spalte 8, Zeile 2 * | | |
| | --- | | |
| D,Y | DE 44 05 855 A (GRIESHABER VEGA KG) 24.August 1995 | 1-4 | |
| | * Spalte 3, Zeile 50 - Zeile 58; Abbildung * | | |
| | --- | | |
| Y | GB 2 061 989 A (CASTALL INC) 20.Mai 1981 * Seite 3, Zeile 5 - Zeile 121 * | 4,8 | |
| | ----- | | |

**RECHERCHIERTE SACHGEBIETE (Int.Cl.6)**

G01F
H01P

Der vorliegende Recherchenbericht wurde für alle Patentansprüche erstellt

| Recherchenort | Abschlußdatum der Recherche | Prüfer |
|---|---|---|
| DEN HAAG | 21.April 1998 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)